# EUROPÄISCHE PATENTSCHRIFT

(11) **EP 1 608 896 B1**
(45) Veröffentlichungstag und Bekanntmachung des Hinweises auf die Patenterteilung: **06.09.2006**
(21) Anmeldenummer: 04722149.4
(22) Anmeldetag: 20.03.2004
(51) Int. Cl.: F16H 59/16, F16H 61/14, F16H 45/02

(54) **HYDRODYNAMISCHER DREHMOMENTWANDLER**
HYDRODYNAMIC TORQUE CONVERTER
CONVERTISSEUR DE COUPLE HYDRODYNAMIQUE

(30) Priorität: 28.03.2003 DE 10314330
(43) Veröffentlichungstag der Anmeldung: 28.12.2005
(73) Patentinhaber: ZF FRIEDRICHSHAFEN Aktiengesellschaft, 88038 Friedrichshafen (DE)
(72) Erfinder: REBHOLZ, Wolfgang, 88045 Friedrichshafen (DE)
(86) Internationale Anmeldenummer: PCT/EP2004/002938
(87) Internationale Veröffentlichungsnummer: WO 2004/085881

(56) Entgegenhaltungen:
- US-A- 4 577 737
- US-A- 6 026 941

## Beschreibung

Die Erfindung bezieht sich auf einen hydrodynamischen Drehmomentwandler nach der im Oberbegriff von Anspruch 1 näher definierten Art.

Hydrodynamische Drehmomentwandler werden häufig zwischen einer Antriebsmaschine und einem Getriebe, vorzugsweise einem lastschaltbaren Getriebe, als stufenlos verstellbares Glied verwendet. Hierbei ist es notwendig, insbesondere im Anfahrvorgang oder beim Wechsel der Schaltstufen im Getriebe, die Betriebsparameter des hydrodynamischen Drehmomentwandlers zu kennen. Es besteht die Möglichkeit, insbesondere das Drehmoment des hydrodynamischen Drehmomentwandlers auf rechnerische Weise zu ermitteln, wenn der Lastzustand der Antriebsmaschine und deren Drehzahl sowie die Abtriebsdrehzahl des hydrodynamischen Wandlers und das Kennfeld des hydrodynamischen Wandlers bekannt sind. Eine präzise Aussage über den tatsächlichen Betriebszustand des hydrodynamischen Wandlers kann jedoch auf diese Weise nicht gegeben werden, da der Betriebszustand des hydrodynamischen Wandlers zusätzlich von weiteren Betriebsparametern, wie beispielsweise die Temperatur und die Viskosität der Druckflüssigkeit sowie Toleranzen des Pumpen- und Turbinenrades, abhängt.

Die DE 198 57 232 C1 offenbart eine Mitnehmerscheibe eines hydrodynamischen Drehmomentwandlers, welche zwischen der Antriebsmaschine und dem Pumpenrad des hydrodynamischen Drehmomentwandlers angeordnet ist und Drehmomentsensoren beinhaltet, um exakt das Drehmoment des Pumpenrades zu ermitteln.

US 4 577 737 beschreibt einer gattungsgemäßen hydrodynamischen Drehmomentwandler.

Der vorliegenden Erfindung liegt die Aufgabe zugrunde, einen hydrodynamischen Drehmomentwandler zu schaffen, bei welchem in allen Betriebszuständen das vom Turbinenrad abgegebene Drehmoment bekannt ist.

Die Aufgabe wird mit einem die kennzeichnenden Merkmale des Anspruchs 1 aufweisenden hydrodynamischen Drehmomentwandler gelöst.

Erfindungsgemäß weist der hydrodynamische Drehmomentwandler in einer ersten Ausgestaltungsform eine Drehmomentmeßeinrichtung auf, welche mit dem Pumpenrad des Drehmomentwandlers in Verbindung steht. Zwischen dem Pumpenrad und der Antriebsmaschine befindet sich eine schaltbare Kupplung, welche auch im schlupfenden Zustand betrieben werden kann, um beispielsweise bei Schaltungen des nachgeschalteten Lastschaltgetriebes diese mitzubeeinflussen, oder das nachgeschaltete Lastschaltgetriebe unabhängig von der Drehzahl der Antriebsmaschine betreiben zu können. Da im schlupfenden Zustand dieser Kupplung sich die Drehzahl des Pumpenrades von der Drehzahl der Antriebsmaschine unterscheidet, ist es nicht möglich, das Drehmoment des Turbinenrades auf rechnerischem Weg über die Wandlerkennung zu ermitteln.

Erfindungsgemäß befindet sich am, im oder an einer mit dem Turbinenrad verbundenen Welle eine Drehmomentmeßeinrichtung, wodurch das Drehmoment des Turbinenrades exakt gemessen werden kann. Es besteht die Möglichkeit, dieses Drehmoment zur Ansteuerung der Kupplung zwischen dem Pumpenrad und der Antriebsmaschine oder zur Ansteuerung der Schaltelemente im nachgeschalteten Lastschaltgetriebe zu verwenden. Vorzugsweise ist die Drehmomentmeßeinrichtung als magnetische Drehmomentmeßeinrichtung, wie in der WO 01/96826 A2 beschrieben, ausgeführt. Eine elektronische Steuereinrichtung ermittelt aus den Werten der Drehmomentmeßeinrichtung das exakte Drehmoment des Turbinenrades. Ebenso besteht die Möglichkeit, die von der elektronischen Steuereinrichtung ermittelten Drehmomente in einem Speichermodul abzulegen und hieraus Lastkollektive zu bilden, um beispielsweise Bauteilzustände des Lastschaltgetriebes oder des Antriebsstrangs zu ermitteln.

In einer weiteren Ausgestaltungsform besteht die Möglichkeit, die Kupplung zwischen dem Pumpenrad und der Antriebsmaschine so anzusteuern, dass ein vorgegebenes Soll-Drehmoment dem gemessenen Ist-Drehmoment des Turbinenrades entspricht. Hierfür wird permanent das Soll-Drehmoment mit dem Ist-Drehmoment verglichen und in Abhängigkeit der Abweichung die Kupplung angesteuert.

Somit besteht die Möglichkeit, das exakte Drehmoment des Turbinenrades zur Beeinflussung von Betätigungseinrichtungen für Kupplungen zu verwenden, auch wenn das Drehmoment des Turbinenrades durch eine Kupplung zwischen dem Turbinenrad und der Antriebsmaschine oder einer Kupplung zwischen dem Pumpenrad und der Antriebsmaschine beeinflußt wird.

Weitere Merkmale sind der Figuren-Beschreibung zu entnehmen.
Es zeigen:

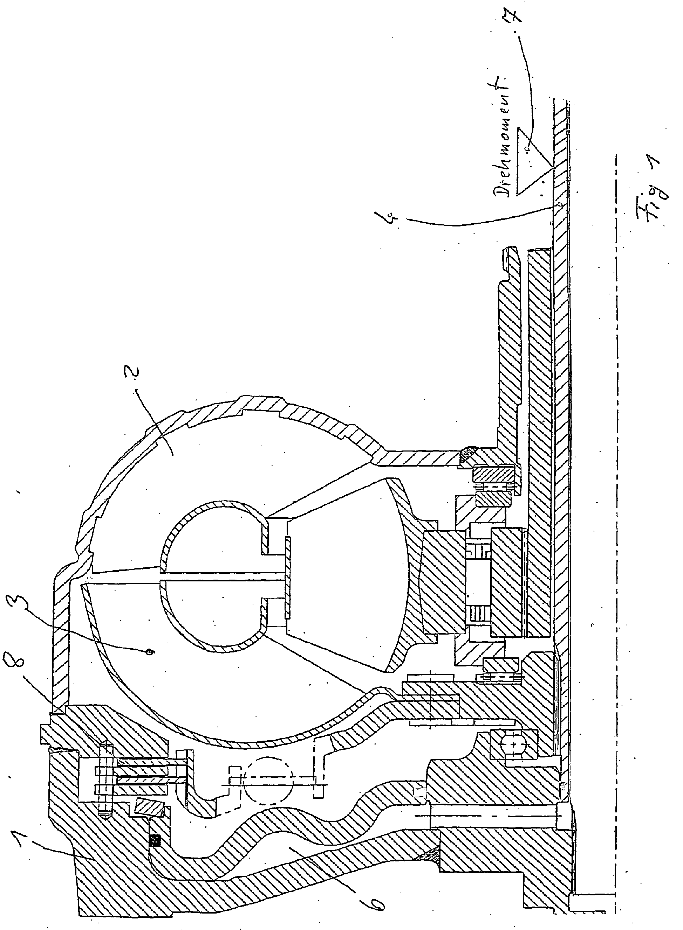

- Fig. 1: einen hydrodynamischen Drehmomentwandler mit einer Kupplung zwischen dem Turbinenrad und der Antriebsmaschine, der nicht unter den Wortlaut des Anspruchs 1 fällt und

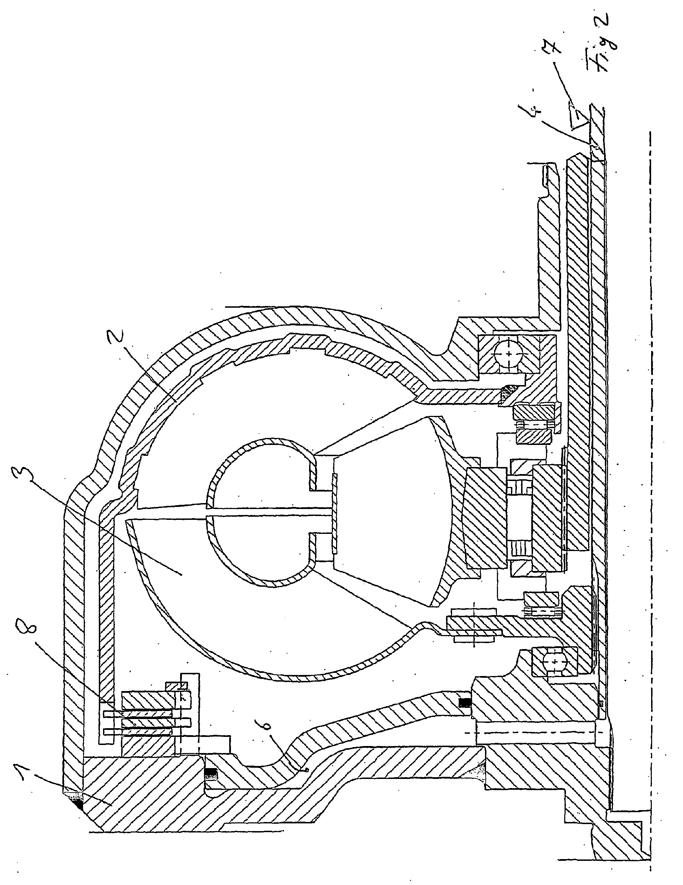

- Fig. 2: einen hydrodynamischen Drehmomentwandler mit einer Kupplung zwischen dem Pumpenrad und der Antriebsmaschine.

### Fig. 1:

Eine nicht gezeigte Antriebsmaschine ist mit einem Wandlerflansch 1, welcher mit einem Pumpenrad 2 des hydrodynamischen Drehmomentwandlers drehfest verbunden ist, verbunden. Ist der hydrodynamische Drehmomentwandler mit Flüssigkeit befüllt und das Pumpenrad 2 in Drehung versetzt, so wirkt auf das Turbinenrad 3 ein Drehmoment. Mit dem Turbinenrad 3 ist eine Abtriebswelle 4 drehfest verbunden, welche als Antriebswelle eines nachgeordneten Schaltgetriebes, vorzugsweise eines Lastschaltgetriebes für Arbeitsmaschinen, wie beispielsweise Grader oder Radlader, verwendet wird. Eine Kupplung 5 kann durch Druckbeaufschlagen eines Kolbenraums 6 in Schließrichtung betätigt werden und verbindet somit die nicht gezeigte Antriebsmaschine über den Wandlerflansch 1 mit dem Turbinenrad 3. Ist die Kupplung 5 dergestalt angesteuert, dass sie sich im Schlupfbetrieb befindet, so ist es nicht möglich, allein durch die Kenntnis des Betriebszustands der Antriebsmaschine das Abtriebsdrehmoment der Abtriebswelle 4 auf rechnerischem Wege zu ermitteln. An der Abtriebswelle 4 ist hierfür eine Drehmomentmeßeinrichtung angeordnet, welche vorzugsweise eine magnetische Drehmomentmeßeinrichtung, wie in der WO 01/96826 A2 beschrieben, ausgeführt ist. Es besteht die Möglichkeit, die Drehmomentmeßeinichtung auch am oder im Turbinenrad 3 anzuordnen. Vorzugsweise wird das Signal der Drehmomentmeßeinrichtung 3 einer nicht gezeigten elektronischen Steuereinheit übermittelt, welche in Abhängigkeit dieses Drehmoments die Kupplung 5 dergestalt ansteuert, dass, unabhängig von der Drehzahl der Antriebsmaschine, ein gefordertes Drehmoment an der Abtriebswelle 4 anliegt, welches insbesondere während einer Schaltung im nachgeordneten Lastschaltgetriebe definierte Werte annehmen soll.

### Fig. 2:

Eine nicht gezeigte Antriebsmaschine ist mit dem Wandlerflansch 1 eines hydrodynamischen Drehmomentwandlers drehfest verbunden. Durch Druckbeaufschlagung eines Kolbenraums 6 wird die Kupplung 8 in Schließrichtung betätigt und verbindet den Wandlerflansch 1 und somit die Antriebsmaschine mit dem Pumpenrad 2. Durch Drehung des Pumpenrades 2 und Befüllung des hydrodynamischen Drehmomentwandlers mit Flüssigkeit wird ein Drehmoment am Turbinenrad 3 erzeugt. Bei schlupfender Kupplung 8 ist es nicht möglich, ausschließlich aus den Parametern der Antriebsmaschine oder des Wandlerflansches das Drehmoment des Turbinenrades zu ermitteln, da die Drehzahl des Pumpenrades 2 nicht bekannt ist. Die Abtriebswelle 4, welche mit dem Turbinenrad 3 drehfest verbunden ist, beinhaltet eine Drehmomentmeßeinrichtung 7, welche das Drehmoment des Turbinenrades ermittelt. Die Drehmomentmeßeinrichtung 7 kann auch am oder im Turbinenrad angeordnet sein. Vorzugsweise wird eine magnetische Drehmomentmeßeinrichtung, wie in der WO 01/96826 A2 beschrieben, verwendet. Es besteht jedoch auch die Möglichkeit, Drehmomentmeßeinrichtungen, wie beispielsweise Dehnmeßstreifen oder ähnliche, zu verwenden. Vorzugsweise übermittelt die Drehmomentmeßeinrichtung 7 Signale an eine nicht gezeigte elektronische Steuereinheit, welche in Abhängigkeit von dem gemessenen Drehmoment der Abtriebswelle 4 und einem vorgegebenen Drehmoment die Kupplung 8 dergestalt ansteuert, dass das gemessene Drehmoment dem vorgegebenen Drehmoment entspricht. Insbesondere besteht die Möglichkeit, hiermit Beeinflussungen der Schaltung und somit den Fahrkomfort des Fahrzeugs zu beeinflussen.

### Bezugszeichen

- 1: Wandlerflansch
- 2: Pumpenrad
- 3: Turbinenrad
- 4: Abtriebswelle
- 5: Kupplung
- 6: Kolbenraum
- 7: Drehmomentmeßeinrichtung
- 8: Kupplung

## Patentansprüche

1. Hydrodynamischer Drehmomentwandler mit einem von einer Antriebsmaschine antreibbaren Pumpenrad (2), mittels welchem ein Turbinenrad (3) antreibbar ist, welches mit einer Antriebswelle eines Getriebes (4) verbunden ist, mit einer Drehmomentmeßeinrichtung (7) aus deren Werten das Drehmoment des Turbinenrades (3) ermittelt wird, wobei das Turbinenrad (3) mit der Drehmomentmeßeinrichtung (7) in Verbindung steht, **dadurch gekennzeichnet, dass** zwischen dem Pumpenrad (2) und der Antriebsmaschine eine Kupplung (8) angeordnet ist, welche die Antriebsmaschine mit dem Pumpenrad (2) verbindet, wobei ein Betätigungszustand der Kupplung (8) in Abhängigkeit von dem von der Drehmomentmeßeinrichtung (7) ermittelten Drehmoment gesteuert oder geregelt wird und die Kupplung (8) **dadurch** so in einem Schlupfzustand betreibbar ist, dass die nachgeschaltete Antriebswelle des Getriebes (4) unabhängig von der Drehzahl der Antriebsmaschine betreibbar ist.

2. Hydrodynamischer Drehmomentwandler nach Anspruch 1, **dadurch gekennzeichnet, dass** die Drehmomentmeßeinrichtung (7) sich direkt am oder im Turbinenrad (3) befindet.

3. Hydrodynamischer Drehmomentwandler nach Anspruch 1, **dadurch gekennzeichnet, dass** die Drehmomentmeßeinrichtung (7) sich direkt an oder in einer Welle (4) befindet, welche mit dem Turbinenrad (3) verbunden ist und eine Antriebswelle für ein Getriebe bildet.

## Claims

1. Hydrodynamic torque converter with an impeller (2) which can be driven by a prime mover and by means of which a turbine wheel (3) can be driven, which wheel is connected to a drive shaft of a transmission (4), with a torquemeter (7), from whose values the torque of the turbine wheel (3) is established, wherein the turbine wheel (3) is connected to the torquemeter (7), **characterised in that** a clutch (8) is disposed between the impeller (2) and the prime mover and connects the prime mover to the impeller (2), wherein an operating state of the clutch (8) is controlled or regulated in accordance with the torque which is established by the torquemeter (7), and the clutch (8) can be operated in a slipping state through the possibility of operating the downstream drive shaft of the transmission (4) independently of the speed of the prime mover.

2. Hydrodynamic torque converter according to Claim 1, **characterised in that** the torquemeter (7) is located directly at or in the turbine wheel (3).

3. Hydrodynamic torque converter according to Claim 1, **characterised in that** the torquemeter (7) is located directly at or in a shaft (4) which is connected to the turbine wheel (3) and forms a drive shaft for a transmission.

## Revendications

1. Convertisseur de couple hydrodynamique comprenant une roue de pompe (2) qui peut être entraînée par une machine d'entraînement, roue qui peut entraîner une roue de turbine (3) qui est raccordée à un arbre d'entraînement d'une transmission (4), un dispositif de mesure de couple (7) dont les valeurs permettent de déterminer le couple de la roue de turbine (3), celle-ci étant raccordée au dispositif de mesure de couple (7), **caractérisé en ce qu'**est agencé entre la roue de pompe (2) et la machine d'entraînement un embrayage (8) qui raccorde la machine d'entraînement à la roue de pompe (2), un état d'actionnement de l'embrayage (8) étant commandé ou régulé en fonction du couple déterminé par le dispositif de mesure de couple (7) et l'embrayage (8) pouvant de la sorte fonctionner dans un état de glissement tel que l'arbre d'entraînement de la transmission (4), qui est monté en aval, puisse opérer indépendamment de la vitesse de rotation de la machine d'entraînement.

2. Convertisseur de couple hydrodynamique selon la revendication 1, **caractérisé en ce que** le dispositif de mesure de couple (7) se trouve directement sur ou dans la roue de turbine (3).

3. Convertisseur de couple hydrodynamique selon la revendication 1, **caractérisé en ce que** le dispositif de mesure de couple (7) se trouve directement sur ou dans un arbre (4) qui est raccordé à la roue de turbine (3) et forme un arbre d'entraînement pour une transmission.
